# EUROPÄISCHE PATENTSCHRIFT

(11) **EP 3 636 466 B1**
(45) Veröffentlichungstag und Bekanntmachung des Hinweises auf die Patenterteilung: **07.04.2021**
(21) Anmeldenummer: 18200042.2
(22) Anmeldetag: 12.10.2018
(51) Int. Cl.: B60H 1/00, B60H 3/06, F16B 2/20, F16B 21/08, F16B 5/06, F16B 2/08, B60N 2/90, B60R 11/00

(54) **ADAPTERPLATTE FÜR EIN LUFTREINIGUNGSGERÄT ZUR VERWENDUNG IN FAHRZEUGEN**
ADAPTOR PLATE FOR AN AIR PURIFYING APPARATUS FOR USE IN VEHICLES
PLAQUE D'ADAPTATEUR POUR UN DISPOSITIF DE NETTOYAGE DE L'AIR DESTINÉ À ÊTRE UTILISÉ DANS DES VÉHICULES

(43) Veröffentlichungstag der Anmeldung: 15.04.2020
(73) Patentinhaber: IQAir AG, 9403 Goldach (CH)
(72) Erfinder: ZUBERBÜHLER, Christoph, 9422 Staad (CH); HAMMES, Frank, 9326 Horn (CH)
(74) Vertreter: Riebling, Peter

(56) Entgegenhaltungen:
- WO-A1-00/06288
- WO-A1-01/66258
- CN-A- 108 482 079
- KR-A- 20130 142 451
- US-A1- 2013 181 492

## Beschreibung

Gegenstand der Erfindung ist ein tragbares Luftreinigungsgerät mit Befestigung in einem Luft-, Wasser- oder Landfahrzeug nach dem Oberbegriff des Patentanspruches 1.

Wenn die Luft in einem Fahrzeug einen unerwünscht hohen Anteil an partikelförmigen und/oder gasförmigen Luftschadstoffen enthält, kann ein tragbares Luftreinigungsgerät in Betrieb genommen werden, um die Fahrzeuginnenraumluft zu reinigen. Darüber hinaus ist es möglich, jedem der Passagiere eine individuell eingestellte und gefilterte Luft zur Verfügung zu stellen.

Es handelt demnach um ein der jeweiligen Person zugeordnetes Luftreinigungsgerät, das einen individuellen, gefilterten Luftstrom - insbesondere in den Gesichtsbereich - einer Person zuführen kann.

Ein Luftreinigungsgerät zur Verwendung im Innenraum eines Kraftfahrzeuges ist beispielsweise mit der DE 82 26 125 U1 bekannt geworden. Das hier gezeigte Luftreinigungsgerät weist ein kreisscheibenförmiges Gehäuse auf und kann im Fahrzeuginneren ohne Zuordnung für einen bestimmten Passagier im Fahrzeug verwendet werden. Der mit einem 12 V Motor angetriebene Radialventilator, der rückwärtsgekrümmte Schaufeln enthält, saugt die Kabinenluft ein und drückt diese durch eine um den Ventilator herumgelegte Filterschicht, um danach die gefilterte Luft durch schräge kreisförmige Kunststofflamellen in den Fahrzeugrinnen auszublasen.
Zur Versorgung des Motors kann das Luftreinigungsgerät mit einem für die Zigarettenanzündersteckdose des Kraftfahrzeuges geeigneten Stecker elektronisch angeschlossen werden.

Die Unterseite des Geräts ist mit einer rutschfesten Oberfläche versehen, sodass auch bei lockerem Hinlegen des Gerätes auf die hintere Sitzbank kein Verrutschen möglich ist.

Gerade bei hohen Geschwindigkeiten ist es jedoch erforderlich, dass das Luftreinigungsgerät sicher im Fahrzeuginnen platziert ist, damit es bei einem Bremsmanöver oder Unfall nicht unkontrolliert durch den Innenraum des Fahrzeuges geschleudert wird. Eine Zuordnung des Gerätes zu einer bestimmten Person ist nicht möglich.

Die KR 2013 0142451 A offenbart ein Luftreinigungsgerät mit Befestigung in einem Fahrzeug, wobei das Luftreinigungsgerät aus einem Ventilator in einem tragbaren Gehäuse besteht, welches einen Lufteinsaugbereich zum Einsaugen von Luft in das Gehäuse und einen Luftausblasbereich zum Ausblasen der Luft aus dem Gehäuse aufweist, wobei ein durch einen Filter gereinigter Ausblasluftstrom in den Fahrzeuginnenraums ausströmt. Die Befestigung des Luftreinigungsgeräts besteht aus einem Schwenkarm, mit dem das Gerät auf einer Adapterplatte montiert wird, welche an unterschiedlichen Positionen im Inneren des Kraftfahrzeuges lösbar festlegbar ist.

Nachteilig an dieser Vorrichtung ist die umständliche Montage des Luftreinigungsgerätes auf der Adapterplatte, wobei stets die Betätigung einer Schraubverbindung notwendig ist, sowie die eingeschränkte Beweglich des Geräts, da dieses lediglich um eine horizontale Achse verschwenkt werden kann.

Auch die DE 39 31 914 A1 zeigt ein Luftreinigungsgerät, welches im Inneren eines Fahrzeuges betrieben werden kann. Das Luftreinigungsgerät wird hierzu in die Hutablage integriert, wofür die Hutablage eine entsprechende Öffnung aufweist, in die das Gerät eingesetzt wird. Somit ist stets eine Modifikation der Hutablage erforderlich, um das Luftreinigungsgerät im Inneren des Fahrzeuges zu montieren.

Zudem ist es aufgrund der in dem Luftreinigungsgerät eingebauten Filter erforderlich, das Luftreinigungsgerät einfach öffnen zu können, um die Filtereinheit zu entnehmen, um diese zu reinigen oder um eine neue Filtereinheit einzusetzen.

Der Erfindung liegt deshalb die Aufgabe zugrunde, ein Luftreinigungsgerät für ein Kraftfahrzeug der eingangs genannten Art so weiterzubilden, dass es sicher im Innenraum des Fahrzeuges fixiert werden kann und bei Bedarf leicht von seinem Platz entfernt werden kann und dass ferner eine Zuordnung zu einem bestimmten Passagier im Fahrzeug möglich ist.

Die der Erfindung zugrunde liegende Aufgaben werden durch die Merkmale des unabhängigen Anspruchs 1 gelöst, während vorteilhafte Ausgestaltungen und Weiterbildungen der Erfindung den Unteransprüchen entnommen werden können.

Ein erfindungsgemäßes Merkmal ist, dass das Luftreinigungsgerät drehbar auf einer Adapterplatte montiert ist, welche an unterschiedlichen Positionen im Inneren des Kraftfahrzeuges fixiert werden kann.

Weiteres Merkmal ist, dass das Luftreinigungsgerät ein Gehäuse aufweist, das in den Abmessungen und der Formgebung etwa einer - für Sportwettbewerbe verwendeten - Diskusscheibe entspricht, wie sie als Wurfgerät im Sport bekannt ist.

Kennzeichnend für diese Form ist, dass die Luftaufbereitung und Luftabgabe in einem relativ kleinen, rotationssymmetrischen Gehäuse stattfindet, so dass sich erstmals die Möglichkeit bietet, ein solches Luftreinigungsgerät an einer Adapterblatte im Fahrzeuginnenraum zu fixieren. Auf dieser Adapterplatte ist das Luftreinigungsgerät um eine zentrale Mittelquerachse drehbar angeordnet.

Somit kann die Richtung des Ausblasstroms durch eine Drehung des Gehäuses um die Rotationsachse des Ventilators verändert werden. So kann der Ausblasluftstrom bspw. gegen die Decke des Fahrzeuges gerichtet werden. Somit ergibt sich eine Veränderung des Ausblasluftstromes in weiten Grenzen, denn das Gehäuse kann über seine, durch die Adapterplatte definierte Rotationsachse frei in jedem beliebigen Rotationswinkel gedreht werden, wobei Drehwinkel von 360 Grad möglich sind.

Zu diesem Zweck ist vorgesehen, dass auf der Adapterplatte, die über eine Kupplungshülse in einer Aussparung des Gerätes eingreift, auch die Stromzuführung für den gehäuseseitigen Ventilator und die übrige Elektronik angeordnet ist, sodass das Gehäuse selbst kabellos ist und über den adapterplattenseitigen Rotationsstromverbinder mit Strom versorgt wird.
Der Rotationsstromverbinder besteht gehäuseseitig aus einer an der einen Gehäuseschale angeordneten Ringhülse, in deren Mittenbereich eine Klinken-Steckbuchse für die Einführung eines adapterplattenseitigen Klinken-Steckers angeordnet ist.

Der adapterplattenseitige Stecker befindet sich im Mittenbereich der adapterplattenseitigen Kupplungshülse und durch Einstecken des adapterplattenseitigen Steckers in die gehäuseseitige Aufnahmebuchse bzw. Klinken-Steckbuchse wird somit eine Stromverbindung hergestellt, die ähnlich einer Klinkensteckverbindung mit zwei Stromadern arbeitet.

Für die Anbringung der Adapterplatte werden zwei Befestigungsarten bevorzugt.

Eine erste Befestigungsart sieht vor, dass die Adapterplatte mit Gurten an den Kopfstützenstreben befestigt wird und dann das scheibenförmige Luftreinigungsgerät an der Rückseite des Vordersitzes auf der Adapterplatte montiert wird.

Die Adapterplatte hat den Vorteil, dass sie eine Kupplungshülse aufweist, auf die das Luftreinigungsgerät aufgesetzt wird und um diese Kupplungshülse gedreht werden kann. Dadurch ist es möglich den Ausblasbereich des Gerätes gezielt zu verändern und ihn in verschiedene Richtungen im Fahrzeuginnenraum zu lenken.

Hierauf ist die Erfindung jedoch nicht beschränkt. Auch die kinematische Umkehrung wird mit der vorliegenden Erfindung beansprucht, so dass das Luftreinigungsgerät eine Kupplungshülse aufweisen kann, welche in eine Aussparung in der Adapterplatte eingreift und verrastbar ist.

Weiteres Merkmal ist, dass ein solches Luftreinigungsgerät in Form eines scheibenförmigen Gehäuses, das bevorzugt rotationssymmetrisch ausgebildet ist, nunmehr die Möglichkeit bietet, dass das Gerät auf einer Adapterplatte in beliebiger Weise um eine horizontale oder vertikale Rotationsachse gedreht werden kann, um so eine gezielte Anstrahlung des Körpers des Benutzers oder von Bereichen des Fahrzeuginnenraums zu ermöglichen.

Durch diese annähernd scheibenförmige Ausbildung der Luftreinigungsvorrichtung ist es erstmals möglich, den Lufteinsaugbereich und den Luftausblasbereich ringsum laufend am Umfang des scheibenförmigen Gehäuses anzuordnen.

Dabei wird es bevorzugt, wenn dem Lufteinsaugbereich ein Winkelbereich von zum Beispiel 270 bis 300 Grad über den Umfang des Gehäuses zugeordnet wird und dem Luftausblasbereich beispielsweise nur noch einen Winkelbereich im Bereich zwischen 60 - 90 Grad zugeordnet wird. Dies hat den Vorteil, dass der Lufteinsaugbereich, der sich über einen Winkelbereich von bevorzugt 270 bis 300 Grad über den Umfang des Gehäuses erstreckt, nunmehr großflächig ausgebildet ist und im gesamten Lufteinsaugbereich ein entsprechend C-förmiger Filter angeordnet werden kann, der sich ebenfalls um den Winkelbereich von bevorzugt 270 bis 300 Grad im Innenraum des Gehäuses erstreckt.

Im von der Filtereinheit freibleibenden Abschnitt ist ein Ausblasraum angeordnet, in den das Ventilatorrad im Betrieb die Luft auf dem Weg hin zum Luftausblasbereich des Gehäuses einbläst.

Im Ausblasraum kann ein Ausblasluftfilter angeordnet werden, der gegebenenfalls mit einer Vorrichtung zur Beduftung verbunden ist.

Somit wird ein leicht handhabbares Gerät mit extrem verkürzten Luftführungskanälen beschrieben, denn nach einem weiteren Merkmal der Erfindung befinden sich der Lufteinsaugbereich und der Luftausblasbereich in der gleichen radialen Ebene am äußeren Umfang des Gehäuses, was mit dem Vorteil verbunden ist, dass eine sehr geringe Baubreite erreicht werden kann. Der Mittenquerbereich des etwa scheibenförmigen Gehäusekörpers spannt eine radiale Ebene auf, die sich vom Mittelpunkt des Gerätes radial nach außen in Richtung zum Außenumfang erstreckt. In dieser radialen Ebene sind nun sowohl der Lufteinsaugbereich als auch der Luftausblasbereich fluchtend und ohne axialen Versatz zueinander angeordnet, was zu einer geringen Baubreite führt.

Somit ist es möglich, an einem ersten Umfangsbereich am Außenumfang des Gehäuses einen Luftausblasstutzen anzuordnen, mit dem die gereinigte und möglicherweise auch beduftete Ausblasluft gezielt auf einen Bereich im Fahrzeuginnenraum gerichtet werden kann und an einem zweiten Umfangsbereich am Außenumfang des Gehäuses den Lufteinsaugbereich anzuordnen. Beide Bereiche befinden sich in der gleichen, am Außenumfang des Gehäuses angeordneten Ringnut.

Dabei wird bevorzugt, wenn der Ausblasluftstrom laminar strömt und turbulenzfrei ist und in seiner Ausblasstärke einstellbar ausgebildet ist, um zu gewährleisten, dass der Benutzer den Luftstrom nicht als störend bemerkt.

Insbesondere, wenn der Ausblasbereich gegen die Decke des Kraftfahrzeuges gerichtet wird, ergibt sich die Art eines Luftschleiers, der sich im gesamten Kraftfahrzeug verteilt und nicht vom Benutzer als störend wahrgenommen wird.

Befindet sich das Luftreinigungsgerät an der Kopfstütze des Fahrers montiert, kann der auf die Decke gerichtete Luftschleier personalisiert dem Fahrer zugeleitet werden.

Die Kupplungshülse der Adapterplatte weist einen Rastverschluss auf, der es ermöglicht das Gerät sicher zu halten und der bei händischer Betätigung leicht geöffnet werden kann, um das Gerät von der Adapterplatte zu lösen.
Der Rastverschluss ist in der Kupplungshülse integriert und weist auf der Rückseite der Adapterplatte eine Auslösetaste auf, die mindestens eine radial am Außenumfang der Kupplungshülse angeordneten Rastbacken betätigt, so dass durch Betätigung die mindestens eine Rastbacken in das Innere der Kupplungshülse bewegt und somit aus den Rastvorsprüngen des Luftreinigungsgerätes herausgeführt werden. Die ein oder mehrere Rastvorsprünge können als Hinterschneidungen in der Aussparung der Rückplatte ausgebildet sein.

Sobald kein Rasteingriff mehr vorliegt, kann das Gerät leicht von der Adapterplatte abgenommen werden.

Bei Aufsetzen des Gerätes ertönt ein Klickgeräusch, wenn die Rastbacken in die Rastvorsprünge des aufgesetzten Luftreinigungsgeräts einrasten.

Eine andere Befestigungsart sieht vor die Adapterplatte zunächst auf der Sitzfläche eines Kraftfahrzeugsitzes zu fixieren um dann anschließend das Luftreinigungsgerät aufzusetzen.

Die Adapterplatte kann hierbei mit dem Sicherheitsgut auf dem Sitz fixiert werden, wobei zunächst der Sicherheitsgut durch eine Lasche auf der Oberseite des Adapters geführt wird und anschließend die Schlosszunge des Sicherheitsgurtes in das Gurtschloss eingeführt wird.

Die vorliegende Erfindung ist nicht auf die Verwendung eines Sicherheitsgurtes zur Fixierung beschränkt, auch mit anderen lösbaren Befestigungsmitteln ist eine Fixierung auf der Sitzfläche möglich.

Auch diese Adapterplatte für die Platzierung auf einem Sitz weist den oben genannten Rastverschluss in der Kupplungshülse auf.

Zusätzliches Merkmal der Erfindung ist, dass in die Kupplungshülse eine zentrale Stromdurchführung angeordnet ist, so dass das auf der Kupplungshülse frei drehbare Gerät in jeglicher Ausrichtung mit Strom versorgt wird.
Die Stromdurchführung befindet sich in einer mittigen Aussparung in der Kupplungshülse, ist stiftförmig ausgebildet und wird bei Aufsetzen des Gerätes in einer Kontaktbuchse im Inneren des aufgesetzten Luftreinigungsgeräts aufgenommen.

Das Gerät kann an die elektrische Einrichtung des Kraftfahrzeuges angeschlossen werden und ist mit einem Schalter versehen sowie einer Schaltleuchte, über die der eingeschaltete Zustand erkennbar ist.

Der verwendete Filter besteht z.B. aus Feinstaubfilter- oder Aktivkohleflies und wird in gefalteter Form um den im Zentrum liegenden Ventilator herumgelegt. Die gefaltete Form hat den Effekt, dass die Faltung einen optimalen Luftdurchlass bei geringstem Druckverlust bewirkt. Mit nur wenigen Handgriffen kann die Frontblatte des Geräts gelöst werden, um den gebauchten Filter zu entfernen und einen neuen Filter einzusetzen.

In einer vorteilhaften Ausführungsform wird zum Einschalten des Luftreinigungsgeräts mindestens ein Finger auf den mittigen Bereich der Deckplatte aufgesetzt und ein leichter Druck ausgeübt, wodurch sich das Gerät einschaltet. Mit jeder Berührung des sich die Geschwindigkeit des Ventilators und somit die Stärke des ausströmenden Luftstromes. Die Änderung der Geschwindigkeit kann haptisch, durch Vibration, oder visuell, durch unterschiedliche Lichtfarben einer integrierten Leuchte, oder akustisch, durch einen Signalton, erfolgen.

So zeigen z.B. ein schwaches blaues Licht und ein bestimmter Signalton eine geringe Geschwindigkeit des Ventilators an, während z.B. stärkeres blaues Licht und ein bestimmter Signalton auf eine mittlere Geschwindigkeit hinweist und ein starkes blaues Licht und ein bestimmter Signalton auf die maximale Geschwindigkeit hinweist.
Im Ruhezustand ist lediglich z.B. ein rotes Licht zu sehen. Blinkt dieses rote Licht, ist das ein Hinweis, dass der Filter gewechselt werden muss.
Weitere Leuchtelemente helfen den Benutzer überhaupt festzustellen, dass ein Luftstrom aus dem Gerät strömt, da der Luftstrom selbst nicht bemerkbar ist. Zu diesem Zweck ist es vorgesehen, dass am oder im Ausblasstutzen optisch wahrnehmbare Leuchtelemente vorhanden sind, die nur dann aufleuchten, wenn auch tatsächlich ein Ausblasluftstrom erzeugt wird.

Allen Ausführungsformen ist gemeinsam, dass ein frei aus dem Gehäuse des Luftreinigungsgeräts abgestrahlter Ausblasluftstrom individuell auf den Benutzer oder Bereiche des Fahrzeuginnenraums gerichtet werden kann und dieser Ausblasluftstrom mindestens durch ein oder mehrere Filter gereinigt ist und noch zusätzliche Eigenschaften aufweisen kann.

Zusätzlich kann eine Vorrichtung zur Beduftung des Ausblasluftstromes vorgesehen sein. Ebenso kann es vorgesehen sein, dass im Innenraum des Gerätes ein lonisator angeordnet ist, um die Abgabe von ionisierter Luft zu ermöglichen.

Demnach betrifft die Erfindung eine personalisierte Luftreinigungsvorrichtung mit einem Gehäuse, welches zumindest einen Lufteinsaugbereich zum Einsaugen von Luft in das Gehäuse und zumindest einen Luftausblasbereich zum Ausblasen der Luft aus dem Gehäuse aufweist, wobei im Gehäuse zumindest ein, um eine Ventilatorrotationsachse rotierbares Ventilatorrad der Luftreinigungsvorrichtung und zumindest ein Einsaugluftfilter der Luftreinigungsvorrichtung zum Filtern der durch den Lufteinsaugbereich eingesaugten Luft angeordnet sind und das Ventilatorrad die Luft im Betrieb der Luftreinigungsvorrichtung zumindest in einer Richtung parallel zur Ventilatorrotationsachse in das Ventilatorrad einsaugt und in zumindest einer Richtung radial zur Ventilatorrotationsachse vom Ventilatorrad wegbläst.

Mit den vorgenannten Merkmalen ergibt sich eine sehr geringe Bauhöhe (=Scheibendicke), wenn das Ventilatorrad in einem vom Einsaugluftfilter teilweise umgebenen Innenraum angeordnet ist und der Lufteinsaugbereich und der Luftausblasbereich in der gleichen radialen Ebene am äußeren Umfang des Gehäuses angeordnet sind.
Von besonderem Vorteil ist, wenn der Lufteinsaugbereich und der Luftausblasbereich, von der Ventilatorrotationsachse aus gesehen, am radial äußeren Rand des Gehäuses angeordnet sind. Damit ergibt sich die Möglichkeit, dass der Lufteinsaugbereich und der Luftausblasbereich im Bereich einer im Mittenbereich des Gehäuses am Außenumfang angeordneten, umlaufenden Ringnut angeordnet sind, was die Bauhöhe (=Scheibendicke) weiter reduziert.

Durch das Anordnen des Ventilatorrades in einem vom Einsaugluftfilter teilweise umgebenen Innenraum und damit teilweise innerhalb des Einsaugluftfilters wird eine sehr kompakte Bauweise der Luftreinigungsgeräte möglich. Hierdurch können sehr einfach transportable und auch vielseitig im Fahrzeuginnenraum einsetzbare Luftreinigungsgeräte geschaffen werden.
Das Ventilatorrad hat in bevorzugten Ausgestaltungsformen eine Vielzahl von Luftschaufeln, welche von der Ventilatorrotationsachse, vorzugsweise distanziert, angeordnet sind oder sich zumindest in diese Richtung erstrecken. Diese Luftschaufeln können auf einer Grundfläche des Ventilatorrades angeordnet sein und von dieser Grundfläche in Richtung parallel zur Rotationsachse, vorzugsweise orthogonal abstehen. Die Grundfläche ist in bevorzugten Ausgestaltungsformen orthogonal zur Ventilatorrotationsachse angeordnet.

Bevorzugt sind die Luftschaufeln, von der Ventilatorrotationsachse aus gesehen, abgewinkelt gegen die Radialrichtung ausgerichtet. In bevorzugten Ausgestaltungsformen ist der Ventilator bzw. das Ventilatorrad als ein sogenannter, rückwärts gekrümmter Radialventilator ausgebildet.
Die Ventilatorräder des erfindungsgemäßen Luftreinigungsgeräts sehen jedenfalls vor, dass das Ventilatorrad die Luft im Betrieb des Luftreinigungsgeräts zumindest in einer Richtung parallel zur Ventilatorrotationsachse in das Ventilatorrad einsaugt und in zumindest einer Richtung radial zur Ventilatorrotationsachse vom Ventilatorrad wegbläst.

Erfindungsgemäße Luftreinigungsgeräte können als Raumluftreiniger eingesetzt werden, um die Luft in einem Fahrzeuginnenraum zu reinigen. Bevorzugte Ausgestaltungsformen von erfindungsgemäßen Luftreinigungsgeräte sehen aber vor, dass die gereinigte Luft gezielt in eine Richtung bzw. in einen Richtungsbereich ausgeblasen wird.

Bevorzugte Ausgestaltungsformen der Erfindung sehen vor, dass, in einer Draufsicht aus Richtung parallel zur Ventilatorrotationsachse gesehen, der Einsaugluftfilter den Innenraum, in dem das Ventilatorrad angeordnet ist, nur unvollständig umgibt.

Besonders bevorzugt ist dabei wiederum vorgesehen, dass, in der Draufsicht aus Richtung parallel zur Ventilatorrotationsachse gesehen, im vom Einsaugluftfilter freibleibenden Abschnitt ein Ausblasraum angeordnet ist, in den das Ventilatorrad im Betrieb die Luft auf dem Weg hin zum Luftausblasbereich des Gehäuses einbläst.

Hierdurch können besonders kompakte Luftreinigungsgeräte gebaut werden. Im Ausblasraum erfindungsgemäßer Geräte können Ausblasluftfilter angeordnet sein. Es sind aber auch erfindungsgemäße Varianten eines Luftreinigungsgerätes denkbar, bei denen auf den Ausblasluftfilter im Ausblasraum verzichtet wird. Vereinfacht gesprochen, ist bei besonders bevorzugten Ausgestaltungsformen der Erfindung vorgesehen, dass der Ausblasraum und der Lufteinsaugbereich in derselben Ebene angeordnet werden. Damit ist der Vorteil einer bisher nicht gekannten Reduzierung der Bauhöhe verbunden.

Bei einer bevorzugten Variante der Erfindung ist vorgesehen, dass der Lufteinsaugbereich des Gehäuses von zwei gedachten, zueinander parallelen Begrenzungsebenen begrenzt ist und ein bzw. der Ausblasraum, in den das Ventilatorrad die Luft im Betrieb auf dem Weg hin zum Luftausblasbereich des Gehäuses einbläst, und/oder der Luftausblasbereich des Gehäuses zumindest teilweise, vorzugsweise vollständig, zwischen den parallelen Begrenzungsebenen angeordnet ist bzw. sind. Die Begrenzungsebenen stehen dabei bevorzugt orthogonal bzw. normal zur Ventilatorrotationsachse. Insbesondere, um den Ausblasraum freizugeben, sehen bevorzugte Varianten der Erfindung vor, dass der Einsaugluftfilter den Innenraum, in dem das Ventilatorrad zumindest teilweise angeordnet ist, nicht vollständig umschließt. In diesem Sinne sehen bevorzugte Varianten der Erfindung vor, dass der Einsaugluftfilter C-förmig ausgebildet ist. Dabei ist der Begriff der C-förmigen Ausgestaltung weit aufzufassen. Das C kann dabei gebogen oder eckig usw. sein. Es handelt sich letztendlich um Formen des Einsaugluftfilters, welche den genannten Innenraum umgeben aber nicht vollständig umfangsgeschlossen sind.

Bevorzugte Varianten erfindungsgemäßer Luftreinigungsvorrichtungen sehen vor, dass das Gehäuse in einer Ansicht aus Richtung parallel zur Ventilatorrotationsachse eine kreisrunde Außenkontur aufweist. Das Gehäuse kann insgesamt eine diskusförmige Außenkontur haben. Der Lufteinsaugbereich und/oder der Luftausblasbereich können von der Ventilatorrotationsachse aus gesehen, am radial äußeren Rand des Gehäuses angeordnet sein. Bevorzugt ist vorgesehen, dass der Lufteinsaugbereich und der Luftausblasbereich von der Rotationsachse aus gesehen, in voneinander verschiedenen Bereichen des radial äußeren Randes des Gehäuses angeordnet sind. Sowohl im Lufteinsaugbereich als auch im Luftausblasbereich kann jeweils eine Abfolge von Lamellen angeordnet sein. Zwischen den Lamellen im Lufteinsaugbereich kann Luft in das Gehäuse eingesaugt werden. Zwischen den Lamellen im Luftausblasbereich kann die Luft aus dem Gehäuse ausgeblasen werden. Die Lamellen können sowohl im Lufteinsaugbereich als auch im Luftausblasbereich gegenüber der radialen Richtung von der Ventilatorrotationsachse aus gesehen, abgewinkelt angeordnet sein.

Der Luftausblasbereich kann erfindungsgemäß durch eine Rotation des Gerätes, um die durch das Gerät und die Adapterplatte verlaufenden Rotationsachse, verändert werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere Vorteile der Erfindung hervor.

Es zeigen:
- Fig. 1:: Schematisierter Montagevorgang des Gerätes
- Fig. 2:: Perspektivische Ansicht der montierten Adapterplatte
- Fig. 3:: Perspektivische Ansicht der Bestandteile des Geräts
- Fig. 4:: Perspektivische Ansicht des Geräts
- Fig. 5:: Perspektivische Ansicht der Gurtdurchführung an der Adapterplatte
- Fig. 6:: Perspektivische Ansicht der Fixierung des Gurtes
- Fig. 7:: Perspektivische Ansicht der Fixierung der Adapterplatte auf der Sitzfläche
- Fig. 8:: Perspektivische Ansicht der Sitzfläche
- Fig. 9:: Schematisierte Montage des Geräts
- Fig. 10:: Schematisierte Betätigung der Rastverbindung
- Fig. 11:: Schematisierter Abheben des Geräts
- Fig. 12:: Öffnungsbewegung des Luftreinigungsgerätes in Draufsicht
- Fig. 13:: Entnahme der Filtereinheit in Draufsicht

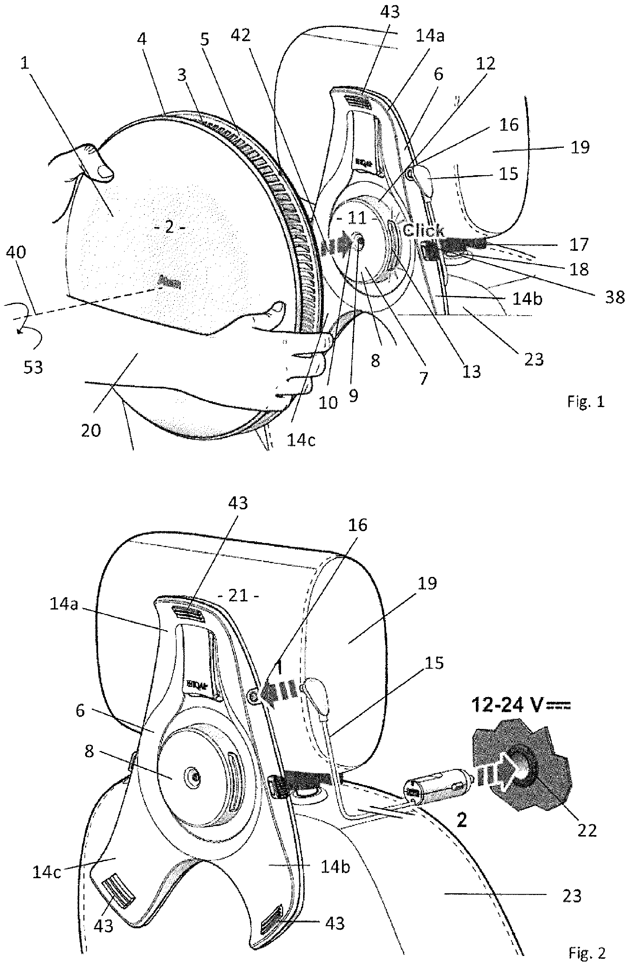

Fig. 1 zeigt ein Luftreinigungsgerät 1, welches aus einer Deckplatte 2, sowie einer Rückplatte 5 und einem zwischen der Front- und Rückplatte angeordneten Außenumfang 4 besteht, der die Seitenfläche bildet. Radial am Außenumfang 4 verteilt sind eine Vielzahl von Lamellen 3 angeordnet, welche je nach Luftdurchführung als Luftansaugbereiche oder Luftauslassbereiche funktionieren.

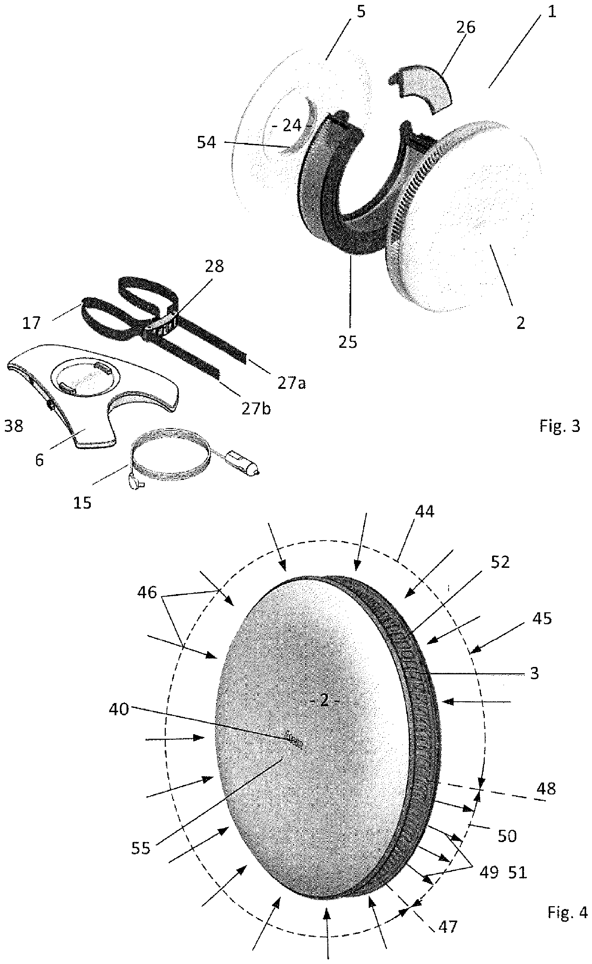

So kann die Ansaugluft in radialer Richtung über einen sich im Bereich von 270-300 Grad erstreckenden Umfangsbereich in das Gerät 1 eingesaugt werden, während die aufbereitete Luft über einen sich im Bereich von 60-90 Grad erstreckenden Umfangsbereich aus dem Gerät 1 ausgestoßen werden kann. Der Luftausblasbereich 50 (gezeigt in Figur 4) erstreckt sich demzufolge in einem Winkelbereich von bevorzugt 60-90 Grad, wobei sich die Ausblasrichtung 49 erfindungsgemäß durch Rotation der Gerätes 1 um die Rotationsachse 40 verändert werden kann.

Die Adapterplatte 6 weist einen Befestigungsbereich 7 auf, der aus einer Kupplungshülse 8 besteht, in der mittig eine Aussparung 9 vorhanden ist, in der ein stromführender Stift, der als Klinkenstecker 10 ausgebildet ist, platziert ist. Über diese Klinkenstecker 10 kann das aufgesetzte Luftreinigungsgerät 1 mit der erforderlichen Spannung versorgt werden. Es handelt sich um eine Rotationsverbindung für die dort angeordneten Stromleitungen, sodass der über das Stromkabel 15 (Figur 2) in die Adapterplatte 6 eingeleitete Niederstrom in die Kupplungshülse 8 eingeleitete wird, in dessen zentralen Mittenbereich der zweipoliger Klinkenstecker 10 angeordnet ist, der in eine gegenüberliegende Klinkerbuchse einrastbar ist, die im Bereich einer gehäuseseitigen Aussparung 24 angeordnet ist. Unter Niederstroms versteht man eine Spannung von z.B. 12 Volt - 24 Volt und einen Strom von z.B. 1 - 2 Ampere.

Auf diese Weise wird bei Aufrechterhaltung der Stromversorgung eine vollständige Drehung des Luftreinigungsgerätes 1 um die Rotationsachse 40 in jedem beliebigen Winkelbereich - auch mehrfach um einen Winkel von 360 Grad - in Pfeilrichtung 53 ermöglicht.

Zur Montage wird das Luftreinigungsgerät 1 in Pfeilrichtung 42 in Richtung der Stirnseite 11 der Kupplungshülse 8 bewegt und über die Kupplungshülse 8 gestülpt, wobei die Kupplungshülse in der Aussparung 24 des Geräts aufgenommen wird. Die Aussparung 24 ist beispielsweise in Figur 3 gezeigt.

Die Kupplungshülse 8 weist einen Seitenbereich 12 auf, an den mindestens eine Rastbacke 13 platziert ist. Diese Rastbacke 13 wird bei Aufsetzen des Luftreinigungsgerätes 1 zunächst in das Innere der Kupplungshülse 8 gezwängt und rastet dann im Inneren des Luftreinigungsgerätes 1 in einer ringförmigen Hinterschneidung bzw. einem Rastvorsprung 54 im Innenumfang der Aussparung 24 ein.

Die Adapterplatte 6 besteht in dem hier gezeigten Beispiel aus den drei Flügeln 14a, 14b, 14c, welche sich in Richtung des Luftreinigungsgerätes gebogen, sternförmig von der Kupplungshülse 8 ausgehend erstrecken.
Über einen Anschluss 16 an der Adapterplatte 6 kann ein Stromkabel 15 eingesteckt werden, um die Adapterplatte 6 mit Strom zu versorgen.
Die Adapterplatte 6 kann über einen Gurt 17 mit den Kopfstützenstreben 18 einer Kopfstütze 19 verbunden und fixiert werden. Das Luftreinigungsgerät 1 ist mobil ausgebildet und kann per Hand 20 auf die Adapterplatte aufgesetzt werden.

Fig. 2 zeigt nur die Adapterplatte 6 mit ihren drei Flügeln 14a, 14b, 14c, welche sich sternförmig ausgehend von der Kupplungshülse 8 erstrecken. Hierauf ist die Erfindung nicht beschränkt. Auch eine Anzahl von zwei oder mehreren Flügeln soll mit der vorliegenden Erfindung umfasst sein.

Die Kupplungshülse 8 ist glockenförmig ausgebildet, damit das Luftreinigungsgerät 1 mit seiner Aussparung 24 aufgesetzt werden kann. Die einzelnen Flügel 14 weisen an ihren Endbereichen gummiartige Auflagepolster 43 auf, welche in eine ringförmige Aussparung der Rückplatte 5 im Bereich des Außenumfangs 4 eingreifen können, um somit das Luftreinigungsgerät 1 zusätzlich zu fixieren und eine unabsichtliche Verdrehung verhindern.

Das Stromkabel 15 kann einen handelsüblichen Adapterstecker mit der Bordversorgung 22 des Fahrzeuges verbunden werden.

Fig. 3 zeigt die einzelnen Bestandteile des Luftreinigungsgerätes 1, welches aus der Deckplatte 2, der Rückplatte 5 besteht, welche zwischen sich die Filtereinheit 25 aufgenommen haben. Die Rückplatte 5 weist eine Aussparung 24 auf, in die später die Kupplungshülse 8 eingeführt wird. Die Adapterplatte 6 kann über den Gurt 17 mit den Kopfstützenstreben 18 verbunden werden. Zur Befestigung weist der Gurt 17 eine Schnalle 28 auf, auf die später separat eingegangen wird. Der Gurt 17 weist die Enden 27a, 27b auf, welche gemäß Fig. 3 bereits durch die Schnalle 28 geführt sind und als freie Enden vorliegen.

Im von der Filtereinheit 25 freibleibenden Abschnitt ist ein Ausblasraum 26 angeordnet, in den das Ventilatorrad im Betrieb die Luft auf dem Weg hin zum Luftausblasbereich 50 des Gehäuses einbläst.

Figur 4 zeigt das Gehäuse, bei welchem die Ansaugluft 44 über den in gestrichelte Linie eingezeichneten Lufteinsaugbereich 45 über radial am Außenumfang angeordneten Lamellen 3 in den Innenraum eingesaugt wird.

Die Ansaugluft 44 wird also in radialer Richtung, in Pfeilrichtung 46 über einen sich im Bereich von 270-300 Grad erstreckenden Umfangsbereich in das Gerät 1 eingesaugt.
Der Umfangsbereich für die Lufteinsaugung erstreckt sich von Position 47 zu Position 48.
Der Luftausblasbereich 50 erstreckt sich demzufolge in einem Winkelbereich von bevorzugt 60-90 Grad von Position 48 zu Position 47.

Somit ist der aus den gehäuseseitigen Lamellen 3 im Bereich des Luftausblasbereichs 50 ausgeblasenen Luftstrom in Pfeilrichtung 49 gerichtet. Dieser Ausblasstrom 51 hat eine so geringe Luftgeschwindigkeit, dass er vom Benutzer praktisch nicht bemerkt wird und zum Nachweis der Funktion des Luftreinigers ist deshalb noch zusätzlich eine Anzeigelichtbalken 52 im Bereich der gehäuseseitigen Lamellen 3 vorgesehen.

Die in der Deckplatte 2 integrierte Berührungsfläche 55 reagiert auf Fingerdruck. Durch die Betätigung kann das Gerät eingeschaltet werden, oder die Intensität des Ausblaststromes (51) reguliert werden. In die oder hinter der Berührungsfläche 55 ist mindestens eine farbige LED integriert (nicht gezeigt), um den Benutzter anhand von verschiedenen Farben und Intensitäten auf den aktuellen Betriebszustand hinzuweisen.

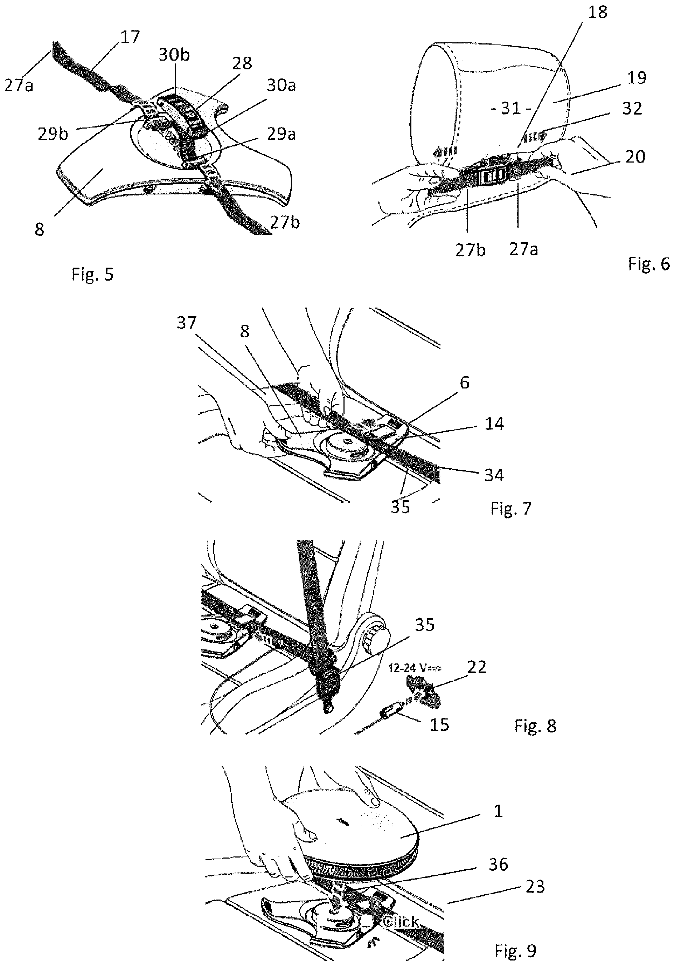

Fig.5 zeigt die Durchführung des Gurtes 17 durch die Rückseite der Adapterplatte 6. Dabei ist der Mittenbereich des Gurtes 17 fest mit der Schnalle 28 verbunden. Der Gurt 17 mit seinen Enden 27a und 27b wird durch die rückseitig an der Adapterplatte verlaufenden Ösen 29a, und 29b geführt.

Die Enden 27a, 27b, umschlingen gemäß Fig. 6 die Kopfstützstreben und werden wieder der Schnalle 28 durch die Durchführung mit Klemmbacken 30a, 30b zugeführt, wo sie durch entsprechende Aussparungen geführt werden, und in Pfeilrichtung 32, sowie entgegengesetzt der Pfeilrichtung 32 angezogen werden, um somit die Adapterplatte an der Kopfstütze 19 zu fixieren.

Fig. 7 zeigt eine alternative Befestigungsmöglichkeit der Adapterplatte 6, die in dem hier gezeigten Beispiel auf der Sitzfläche 37 befestigt werden kann. Dazu wird die Adapterplatte 6 über dem Gurt 33 fixiert, der durch eine Lasche 34 der Adapterplatte 6 geführt wird.

Fig. 8 zeigt wie der Gurt 33 in die Schließe 35 eingeführt ist und der Netzstecker 15 mit der Bordspannung 22 verbunden wird.

Anschließend kann gemäß Fig. 9 das Luftfiltergerät 1 in Pfeilrichtung 36 auf die Adapterplatte 6 aufgesetzt werden, wobei sich das Gerät mit der Kupplungshülse 8 verbindet und wobei aufgrund der durch die Kupplungshülse geführten Stromverbindung 10 auch eine Versorgung des Luftfiltergerätes 1 gewährleistet ist.

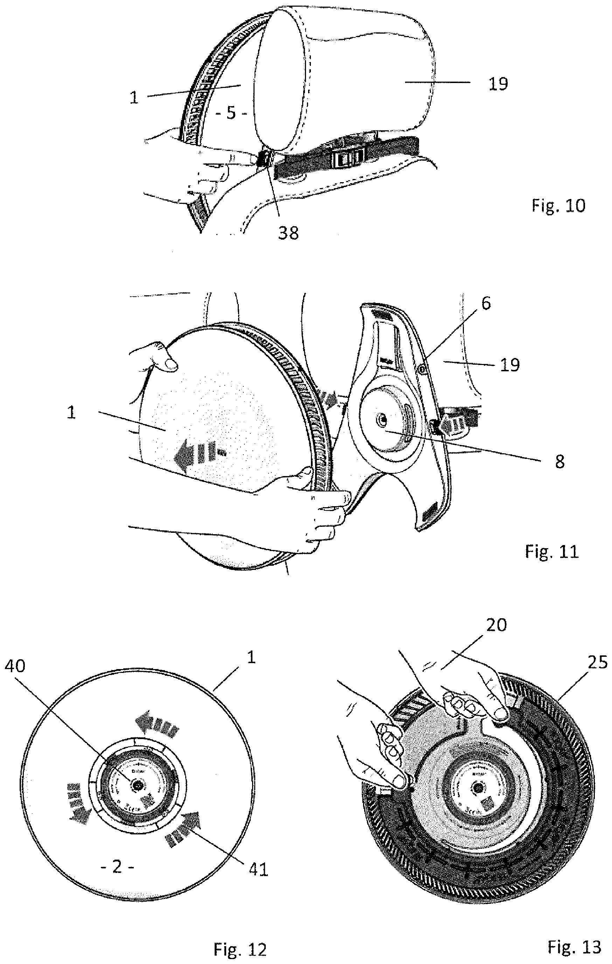

Fig. 10 zeigt wie das erfindungsgemäße Luftreinigungsgerät 1 von der Kopfstütze 19 abgenommen werden kann. Dazu kann eine an der Adapterplatte 6 vorhandene Entsperrungstaste 38 betätigt werden, wodurch die Rastbacken 13 außer Eingriff mit der Aussparung 34 des Luftreinigungsgerätes 1 kommen, und das Luftreinigungsgerät 1 somit in Pfeilrichtung 39 von der Kopfstütze 19 entfernt werden kann.

Die Entsperrungstaste 38 kann, wie in Figur 1 gezeigt, seitlich an der Adapterplatte 6 angebracht sein, oder auch auf der Rückseite der Adapterplatte (nicht gezeigt) von wo sie einfach betätigt werden kann.

Fig. 11 zeigt wie nach der Entfernung des Luftreinigungsgerätes 1 nunmehr die Adapterplatte 6 auf der Rückseite des Sitzes bzw. der Kopfstütze 19 verbleibt. Fig. 12 zeigt wie das Luftreinigungsgerät 1 beim Drehen der Deckplatte 2 in Pfeilrichtung 41 um die Achse 40 geöffnet werden kann.

Nach Öffnung der Deckplatte 2 kann gemäß Figur 13 die Filtereinheit 25 aus dem Inneren des Luftreinigungsgerätes 1 per Hand 20 entnommen werden.

### Zeichnungslegende

- 1: Luftreinigungsgerät
- 2: Deckplatte
- 3: Lamellen
- 4: Außenumfang
- 5: Rückplatte
- 6: Adapterplatte
- 7: Befestigungsbereich
- 8: Kupplungshülse
- 9: Aussparung
- 10: Klinkenstecker
- 11: Stirnseite (von 8)
- 12: Seitenbereich (von 8)
- 13: Rastbacken
- 14: Flügel a, b, c
- 15: Stromkabel
- 16: Anschluss
- 17: Gurt a, b
- 18: Kopfstützenstreben
- 19: Kopfstütze
- 20: Hand
- 21: Rückseite (von 13)
- 22: Bordversorgung
- 23: Sitz
- 24: Aussparung
- 25: Filtereinheit
- 26: Ausblasraum
- 27: Enden a, b (von 17)
- 28: Schnalle
- 29: Öse a, b
- 30: Durchführung a, b
- 31: Vorderseite (von 19)
- 32: Pfeilrichtung
- 33: Sicherheitsgurt
- 34: Lasche
- 35: Gurtschloss
- 36: Pfeilrichtung
- 37: Sitzfläche
- 38: Entsperrungstaste
- 39: Pfeilrichtung
- 40: Rotationsachse
- 41: Pfeilrichtung
- 42: Pfeilrichtung
- 43: Verrastung
- 44: Ansaugluft
- 45: Lufteinsaugbereich
- 46: Pfeilrichtung
- 47: Position
- 48: Position
- 49: Pfeilrichtung
- 50: Luftausblasbereich
- 51: Ausblasstrom
- 52: Anzeigelichtbalken
- 53: Pfeilrichtung
- 54: Rastvorsprung
- 55: Betätigungsfläche

## Patentansprüche

1. Luftreinigungsgerät (1) mit Befestigung in einem Fahrzeug, wobei das Luftreinigungsgerät (1) aus einem Ventilator in einem tragbaren Gehäuse (2, 4, 5) besteht, welches zumindest einen Lufteinsaugbereich (45) zum Einsaugen von Luft in das Gehäuse (2, 4, 5) und zumindest einen Luftausblasbereich (50) zum Ausblasen der Luft aus dem Gehäuse (2, 4, 5) aufweist, wobei ein gereinigter Ausblasluftstrom (51) in den Fahrzeuginnenraums ausströmt, wobei die Befestigung aus einer Adapterplatte (6) besteht, die an unterschiedlichen Positionen im Inneren des Kraftfahrzeuges lösbar festlegbar ist und das Luftreinigungsgerät (1) drehbar auf der Adapterplatte (6) montiert ist, **dadurch gekennzeichnet, dass** die Adapterplatte (6) für die Montage des Luftreinigungsgeräts (1) eine Kupplungshülse (8) aufweist, die im Inneren des Luftreinigungsgeräts (1) in einer Aussparung (24) verrastbar ist.

2. Luftreinigungsgerät (1) nach Anspruch 1, **dadurch gekennzeichnet, dass** die Kupplungshülse (8) glockenförmig ausgebildet ist.

3. Luftreinigungsgerät (1) nach Anspruch 1 oder 2, **dadurch gekennzeichnet, dass** ein Rastverschluss (13) in der Kupplungshülse (8) integriert ist und über eine adapterplattenseitige Entsperrungstaste (38) entsperrt werden kann.

4. Luftreinigungsgerät (1) nach einem der Ansprüche 1 bis 3, **dadurch gekennzeichnet, dass** durch die Betätigung der adapterplattenseitigen Entsperrungstaste (38) eine oder mehrere Rastbacken (13) der Kupplungshülse (8) außer Eingriff mit ein oder mehreren Rastvorsprüngen (54) der Rückplatte (5) des Luftreinigungsgeräts (1) kommen.

5. Luftreinigungsgerät (1) nach einem der Ansprüche 1 bis 4, **dadurch gekennzeichnet, dass** die Adapterplatte (6) mittels mindestens einem Gurt (27) an den Kopfstützenstreben (18) eines Fahrzeugsitzes (23) montierbar ist.

6. Luftreinigungsgerät (1) nach einem der Ansprüche 1 bis 4, **dadurch gekennzeichnet, dass** die Adapterplatte (6) mittels eines fahrzeugseitigen Sicherheitsgurts (33) auf der Sitzfläche (37) eines Sitzes (23) montierbar ist.

7. Luftreinigungsgerät (1) nach einem der Ansprüche 1 bis 6, **dadurch gekennzeichnet, dass** die Adapterplatte (6) mindestens zwei Flügel (14 a, b, c) aufweist, die sich in radialer Richtung erstrecken und das Luftreinigungsgerät (1) rückseitig abstützen und fixieren.

8. Luftreinigungsgerät (1) nach einem der Ansprüche 1 bis 7, **dadurch gekennzeichnet, dass** in einer Aussparung (9) der Adapterplatte (6) ein Klinkenstecker (10) positioniert ist, der in eine Klinken-Steckbuche in der Rückplatte (5) des aufgesetzten Luftreinigungsgeräts (1) eingreift und der Stromzuführung dient.

9. Luftreinigungsgerät (1) nach einem der Ansprüche 1 bis 8, **dadurch gekennzeichnet, dass** der Lufteinsaugbereich (45) und der Luftausblasbereich (50), von der Ventilatorrotationsachse (40) aus gesehen, am Außenumfang (4) des Gehäuses (2, 4, 5) angeordnet sind und dass der Lufteinsaugbereich (45) und der Luftausblasbereich (50), von der Ventilatorrotationsachse (40) aus gesehen, in voneinander verschiedenen Bereichen des Außenumfangs (4) des Gehäuses (2, 4, 5) angeordnet sind.

10. Luftreinigungsgerät (1) nach einem der Ansprüche 1 bis 9, **dadurch gekennzeichnet, dass** das Gehäuse (2, 4, 5) im Lufteinsaugbereich (45) und/oder im Luftausblasbereich (50) eine Abfolge von Lamellen (3) aufweist, wobei zwischen den Lamellen (3) im Lufteinsaugbereich (45) Luft in das Gehäuse (2, 4, 5) einsaugbar ist und zwischen den Lamellen (3) im Luftausblasbereich (50) Luft aus dem Gehäuse (2, 4, 5) ausblasbar ist.

## Claims

1. Air purifying apparatus (1) with attachment in a vehicle, wherein the air purifying apparatus (1) consists of a fan in a portable housing (2, 4, 5), which has at least one air intake region (45) for drawing air into the housing (2, 4, 5) and at least one air discharge region (50) for blowing the air out of the housing (2, 4, 5), wherein a purified discharge air stream (51) flows out into the vehicle interior, wherein the attachment consists of an adapter plate (6) which is releasably fixable at different positions in the interior of the motor vehicle and the air purifying apparatus (1) is mounted rotatably on the adapter plate (6), **characterised in that** the adapter plate (6) has a coupling sleeve (8), which is lockable in a recess (24) in the interior of the air purifying apparatus (1), for mounting the air purifying apparatus (1).

2. Air purifying apparatus (1) according to claim 1, **characterised in that** the coupling sleeve (8) is designed like a bell.

3. Air purifying apparatus (1) according to claim 1 or 2, **characterised in that** a locking closure (13) is integrated in the coupling sleeve (8) and is releasable via a release button (38) on the adapter plate side.

4. Air purifying apparatus (1) according to one of claims 1 to 3, **characterised in that** by actuating the release button (38) on the adapter plate side, one or more locking jaws (13) of the coupling sleeve (8) come out of engagement with one or more locking projections (54) of the rear plate (5) of the air purifying apparatus (1).

5. Air purifying apparatus (1) according to one of claims 1 to 4, **characterised in that** the adapter plate (6) is mountable by means of at least one belt (27) on the head support bars (18) of a vehicle seat (23).

6. Air purifying apparatus (1) according to one of claims 1 to 4, **characterised in that** the adapter plate (6) is mountable on the seating surface (37) of a seat (23) by means of a seat belt (33) on the vehicle side.

7. Air purifying apparatus (1) according to one of claims 1 to 6, **characterised in that** the adapter plate (6) has at least two wings (14 a, b, c) which extend in radial direction and support and fix the air purifying apparatus (1) on the rear side.

8. Air purifying apparatus (1) according to one of claims 1 to 7, **characterised in that** a jack plug (10), which engages in a jack socket in the rear plate (5) of the attached air purifying apparatus (1) and which serves for power supply, is positioned in a recess (9) of the adapter plate (6).

9. Air purifying apparatus (1) according to one of claims 1 to 8, **characterised in that** the air intake region (45) and the air discharge region (50), seen from the fan rotational axis (40), are arranged on the outer circumference (4) of the housing (2, 4, 5) and **in that** the air intake region (45) and the air discharge region (50), seen from the fan rotational axis (40), are arranged in regions of the outer circumference (4) of the housing (2, 4, 5) which are different from one another.

10. Air purifying apparatus (1) according to one of claims 1 to 9, **characterised in that** the housing (2, 4, 5) in the air intake region (45) and/or in the air discharge region (50) has a sequence of fins (3), wherein air can be drawn into the housing (2, 4, 5) between the fins (3) in the air intake region (45) and air can be blown out of the housing (2, 4, 5) between the fins (3) in the air discharge region (50).

## Revendications

1. Appareil de purification d'air (1) avec fixation dans un véhicule, dans lequel l'appareil de purification d'air (1) est constitué d'un ventilateur dans un boîtier portatif (2, 4, 5) qui comporte au moins une zone d'aspiration d'air (45) pour aspirer de l'air dans le boîtier (2, 4, 5) et au moins une zone de soufflage d'air (50) pour souffler l'air hors du boîtier (2, 4, 5), dans lequel un courant d'air de soufflage purifié (51) s'écoule dans l'habitacle de véhicule, dans lequel la fixation est constituée d'une plaque d'adaptateur (6) qui est apte à être fixée de manière amovible en différentes positions à l'intérieur du véhicule automobile et l'appareil de purification d'air (1) est monté de manière rotative sur la plaque d'adaptateur (6), **caractérisé en ce que** la plaque d'adaptateur (6) présente un manchon d'accouplement (8) pour le montage de l'appareil de purification d'air (1), qui est apte à être encliqueté à l'intérieur de l'appareil de purification d'air (1) dans une cavité (24).

2. Appareil de purification d'air (1) selon la revendication 1, **caractérisé en ce que** le manchon d'accouplement (8) est réalisé en forme de cloche.

3. Appareil de purification d'air (1) selon la revendication 1 ou 2, **caractérisé en ce qu'une** fermeture à encliquetage (13) est intégrée dans le manchon d'accouplement (8) et peut être débloquée par un bouton poussoir de déblocage du côté plaque d'adaptateur (38).

4. Appareil de purification d'air (1) selon l'une des revendications 1 à 3, **caractérisé en ce que** par l'actionnement du bouton poussoir de déblocage du côté plaque d'adaptateur (38), une ou plusieurs mâchoires d'encliquetage (13) du manchon d'accouplement (8) sont désengagées d'une ou plusieurs saillies d'encliquetage (54) de la plaque arrière (5) de l'appareil de purification d'air (1).

5. Appareil de purification d'air (1) selon l'une des revendications 1 à 4, **caractérisé en ce que** la plaque d'adaptateur (6) est apte à être montée au moyen d'au moins une courroie (27) sur le support d'appui-tête (18) d'un siège d'automobile (23).

6. Appareil de purification d'air (1) selon l'une des revendications 1 à 4, **caractérisé en ce que** la plaque d'adaptateur (6) est apte à être montée au moyen d'une ceinture de sécurité du côté véhicule (33) sur la surface de siège (37) d'un siège (23).

7. Appareil de purification d'air (1) selon l'une des revendications 1 à 6, **caractérisé en ce que** la plaque d'adaptateur (6) comporte au moins deux ailes (14a, b, c) qui s'étendent dans la direction radiale et supportent et fixent l'appareil de purification d'air (1) à l'arrière.

8. Appareil de purification d'air (1) selon l'une des revendications 1 à 7, **caractérisé en ce que** dans une cavité (9) de la plaque d'adaptateur (6) est positionnée une fiche à déclic (10) qui vient en prise dans un alvéole à déclic dans la plaque arrière (5) de l'appareil de purification d'air (1) posé et sert à l'amenée de courant.

9. Appareil de purification d'air (1) selon l'une des revendications 1 à 8, **caractérisé en ce que** la zone d'aspiration d'air (45) et la zone de soufflage d'air (50), vues de l'axe de rotation de ventilateur (40), sont disposées sur la périphérie extérieure (4) du boîtier (2, 4, 5) et que la zone d'aspiration d'air (45) et la zone de soufflage d'air (50), vues de l'axe de rotation de ventilateur (40), sont disposées dans des zones différentes l'une de l'autre de la périphérie extérieure (4) du boîtier (2, 4, 5).

10. Appareil de purification d'air (1) selon l'une des revendications 1 à 9, **caractérisé en ce que** le boîtier (2, 4, 5) présente une succession de lamelles (3) dans la zone d'aspiration d'air (45) et/ou dans la zone de soufflage d'air (50), dans lequel entre les lamelles (3) dans la zone d'aspiration d'air (45), de l'air peut être aspiré dans le boîtier (2, 4, 5) et, entre les lamelles (3) dans la zone de soufflage d'air (50), de l'air peut être soufflé hors du boîtier (2, 4, 5).
